# EUROPEAN PATENT SPECIFICATION

(11) **EP 3 050 810 B1**
(45) Date of publication and mention of the grant of the patent: **01.11.2017**
(21) Application number: 16153531.5
(22) Date of filing: 29.01.2016
(51) Int. Cl.: B65B 11/04, F16C 19/00

(54) **WRAPPING MACHINE WITH A ROTARY PLATFORM**
EINWICKELMASCHINE MIT EINER DREHPLATTFORM
MACHINE À EMBALLER AVEC UNE PLATE-FORME TOURNANTE

(30) Priority: 30.01.2015 IT BO20150039
(43) Date of publication of application: 03.08.2016
(73) Proprietor: MITEC S.r.l. con unico socio, 47521 Cesena (IT)
(72) Inventor: PAGLIARANI, Imerio, 47035 GAMBETTOLA (IT); PAOLI, Giuseppe, 47521 CESENA (IT)
(74) Representative: Manconi, Stefano

(56) References cited:
- EP-A1- 2 808 262
- EP-A2- 1 092 627
- WO-A2-2008/065519
- US-A1- 2013 300 047

## Description

The present invention relates to a wrapping machine with a rotary platform.

In particular, the present invention relates to a wrapping machine for wrapping products with at least one band of wrapping material.

The wrapping machine comprises a base; a rotary platform, which defines a support surface for at least one product, and is fitted on the base to rotate around a substantially vertical rotation axis, perpendicular to the support surface; and a plurality of roller support devices interposed between the base and the rotary platform and distributed around said rotation axis.

The wrapping machine also comprises a guide upright, which projects upwards from the base, and extends in a vertical direction substantially parallel to the rotation axis of the rotary platform; and a support slide, which is configured to receive and hold a spool of the band of wrapping material, and is movable along the guide upright. Each roller support device comprises a coupling shaft made of steel, fitted on the base, and a pair of rollers fitted on the coupling shaft to rotate about a longitudinal axis of the coupling shaft.

The coupling shaft has a contoured shape, and comprises two narrow end portions, each of them being engaged in a rotary manner by a roller, and a wide intermediate portion, which acts as a spacer between the rollers, and allows the coupling of the roller support device with the base.

The wrapping machines of the known type described above are known from US-A-2013/0300047 and have some drawbacks, mainly deriving from the fact that the chip removal machining performed by machine tools to impart to the coupling shaft the aforesaid contoured shape is relatively complex and expensive.

The wrapping machines of the known type described above have, moreover, the further drawback that the steel coupling shaft transmits the vibrations generated by the rotary platform first to the base and then to the support pavement, thus compromising its stability over time.

The object of the present invention is to provide a wrapping machine with a rotary platform that is free from the aforesaid drawbacks and which is of simple and economic implementation.

According to the present invention, it is provided a wrapping machine with a rotary platform as claimed in the attached claims.

The present invention will now be described with reference to the accompanying drawings illustrating a non-limiting embodiment, wherein:

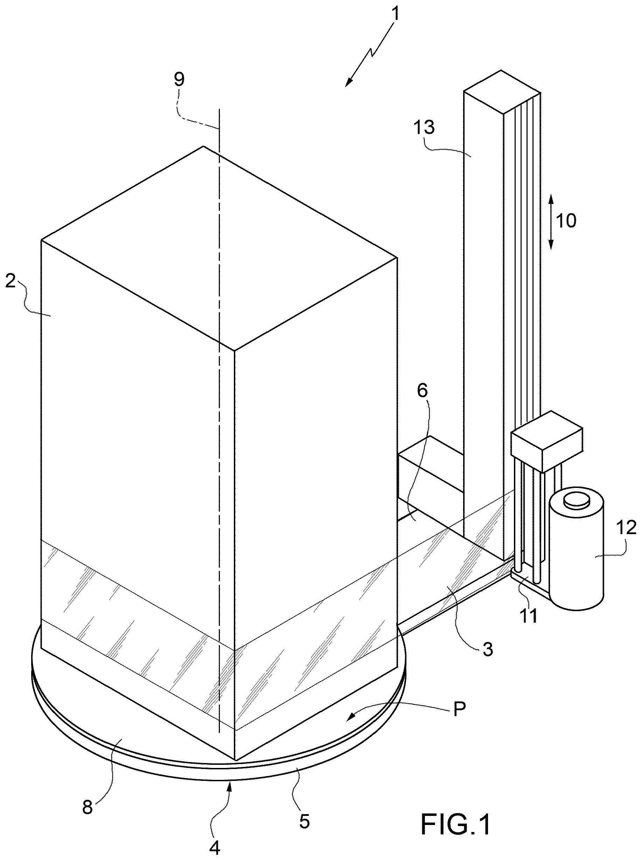

Figure 1 is a schematic perspective view, with parts removed for clarity's sake, of a preferred embodiment of the wrapping machine of the present invention;

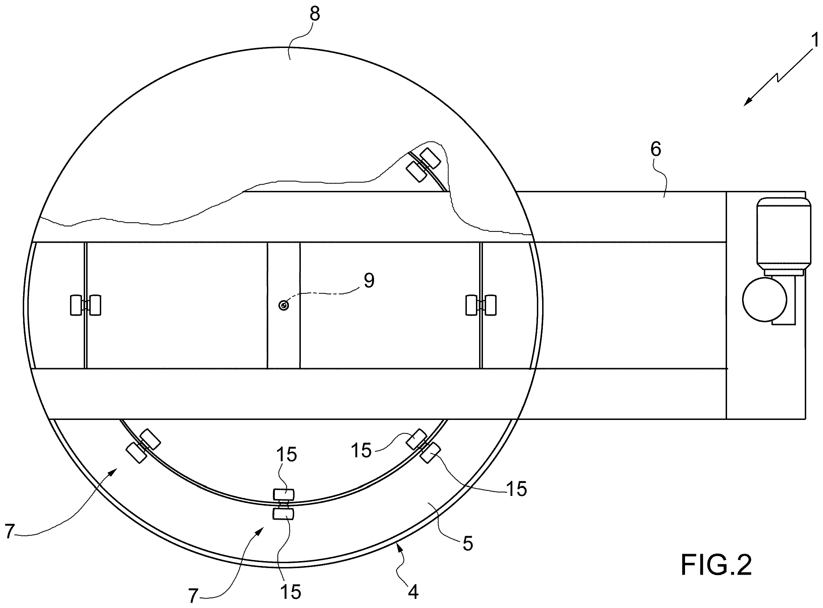

Figure 2 is a schematic plan view, with parts removed for clarity's sake, of a detail of the wrapping machine of Figure 1;
Figure 3 is a longitudinal section of a detail of Figure 2; and
Figure 4 is a section along the line IV-IV of Figure 3. With reference to Figures 1 and 2, 1 indicates, as a whole, a wrapping machine for wrapping products 2 in a band 3 of wrapping material, in this case a stretch film band.

The wrapping machine 1 comprises a substantially flat base 4 comprising, in turn, a substantially circular plate 5 and a substantially rectangular plate 6 connected to each other.

The base 4 is rotatably engaged, by interposing a plurality of roller support devices 7, by a rotary platform 8, which has a circular shape, is superimposed on the plate 5, and is fitted to rotate, with respect to the base 4 and under the thrust of a known and not shown actuating device, about a rotation axis 9 substantially parallel to a vertical direction 10.

The platform 8 defines a substantially horizontal support surface P for at least one product 2, and cooperates with a support slide 11 configured to receive and hold a spool 12 of band 3.

The slide 11 is movable along a vertical guide upright 13 projecting upwards from the plate 6 in the direction 10.

By combining the movements of the platform 8 about the axis 9 with the displacements of the slide 11 and, therefore, of the spool 12 in the direction 10, the band 3 is spirally wound around the product 2.

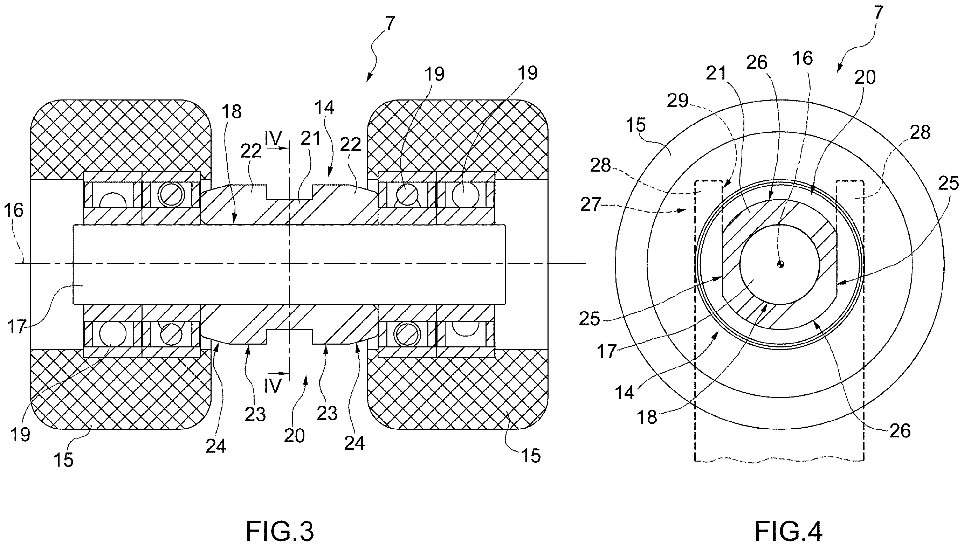

As shown in Figures 3 and 4, the roller support devices 7 are evenly distributed around the axis 9, each of them comprising a respective coupling shaft 14 fitted on the base 4 and a respective pair of rollers 15 fitted on the shaft 14.

The shaft 14 has a longitudinal axis 16, substantially horizontal and transverse to the direction 10, and comprises a central pin 17, which is made of metal, in particular of steel, is externally delimited by a smooth cylindrical surface 18 coaxial to the axis 16, and has, therefore, a substantially constant diameter along the axis 16.

Each roller 15 is rotatably coupled to a respective free end of the pin 17 by interposing a pair of rolling bearings 19.

The shaft 14 further comprises a tubular spacer 20, which is made of plastic material, extends around the pin 17 coaxially to the axis 16, and is coupled to the pin 17 in an axially and angularly fixed manner. In the present case, the spacer 20 is printed directly on the pin 17.

The spacer 20 extends between the bearings 19 of the two rollers 15, and comprises a narrow central portion 21 and two wide end portions 22 located on opposite sides of the portion 21.

Each portion 22 is externally delimited, starting from the portion 21, by a cylindrical surface 23 and by a truncated conical surface 24.

The portion 21 is externally delimited by two flat faces 25, which are parallel to each other and to the direction 10, and are connected by two connecting surfaces 26 having the shape of a cylindrical sector.

Each shaft 14 is fitted in a corresponding seat 27, which is formed in the base 4, has the shape of a fork, and comprises two parallel arms 28 defining a guide 29 parallel to the direction 10.

The guide 29 is engaged in a sliding and angularly fixed manner by the faces 25 of the respective spacer 20 so as to prevent the relative shaft 14 from rotating about its axis 16.

Since each coupling shaft 14 is coupled to the base 4 through the spacer 20, the vibrations transmitted by the platform 8 to the rollers 15 and to the shaft 14 are absorbed by the plastic material of the spacer 20 so as not to stress the base 4 and, therefore, the support pavement (not shown) of the wrapping machine 1.

The roller support devices 7 also have the further advantage that the coupling shaft 14, defined by the smooth cylindrical pin 17 and by the spacer 20 made of plastic material, involves relatively low production costs, which are lower than the production cost of a coupling shaft 14 made entirely of steel by machining with machine tools.

## Claims

1. A wrapping machine with a rotary platform to wrap products (2) with at least one band of wrapping material (3); the wrapping machine comprising a base (4); a rotary platform (8), which defines a support surface (P) for at least one product (2) and is fitted on the base (4) to rotate around a rotation axis (9) which is substantially perpendicular to the support surface (P); a plurality of roller support devices (7), which are interposed between the base (4) and the rotary platform (8) and are distributed around said rotation axis (9); a guide upright (13), which is substantially parallel to said rotation axis (9); and a support slide (11), which is configured to receive and hold a spool (12) of the band of wrapping material (3) and is movable along the guide upright (13); each roller support device (7) comprising a coupling shaft (14) fitted on the base (4) and a pair of rollers (15) fitted on the coupling shaft (14) to rotate around a longitudinal axis (16) of the coupling shaft (14); each coupling shaft (14) comprising a central pin (17), which is made of a metal material and is delimited by an outer smooth cylindrical surface (18), **characterized in that** a spacer (20), which is made of a plastic material is arranged on the pin (17) between the rollers (15); the coupling shaft (14) being coupled to the base (4) through the spacer (20).

2. A wrapping machine according to claim 1, wherein the spacer (20) is coupled to the pin (17) in an axially and angularly fixed manner.

3. A wrapping machine according to claim 1 or 2, wherein the base (4) has, for each roller support device (7), a respective seat (27), which is configured to receive and hold the coupling shaft (14) of the roller support device (7).

4. A wrapping machine according to claim 3, wherein the seat (27) comprises a guide (29), which is engaged by the spacer (20) in a sliding and angularly fixed manner.

5. A wrapping machine according to claim 4, wherein the seat (27) substantially has the shape of a fork and comprises two substantially parallel arms (28) defining the guide (29).

6. A wrapping machine according to claim 5, wherein the spacer (20) is at least partially radially delimited by two flat surfaces (25), which are substantially parallel to each other so as to engage the guide (29) in a sliding and angularly fixed manner.

7. A wrapping machine according to claim 6, wherein the spacer (20) comprises two wide end portions (22) and one narrow intermediate portion (21), which is arranged between the end portions (22); the flat faces (25) being formed at the intermediate portion (21).

8. A wrapping machine according to any one of the previous claims, wherein the rotary platform (8) is in contact with the rollers (15) of the roller support devices (15).

9. A wrapping machine according to any one of the previous claims, wherein the central pin (17) has a constant diameter.

## Patentansprüche

1. Einwickelmaschine mit einer Drehplattform, um Produkte (2) mit wenigstens einer Bahn von Einwickelmaterial (3) einzuwickeln; wobei die Einwickelmaschine umfasst: eine Basis (4); eine Drehplattform (8), welche eine Unterstützungsoberfläche (P) für wenigstens ein Produkt (2) definiert und auf der Basis (4) angebracht ist, um sich um eine Rotationsachse (9) zu drehen, welche im Wesentlichen senkrecht zu der Unterstützungsoberfläche (P) ist; eine Mehrzahl von Rollenunterstützungseinrichtungen (7), welche zwischen der Basis (4) und der Drehplattform (8) angeordnet und um die Rotationsachse (9) herum verteilt sind; eine Führungsschiene (13), welche im Wesentlichen parallel zu der Rotationsachse (9) ist; und eine Unterstützungs-Schiebeführung (11), welche dazu ausgebildet ist, eine Rolle (12) der Bahn des Einwickelmaterials (3) aufzunehmen und zu halten, und welche entlang der Führungsschiene (13) beweglich ist; wobei jede Rollenunterstützungseinrichtung (7) eine Kopplungswelle (14) umfasst, welche auf der Basis (4) befestigt ist, und ein Paar von Rollen (15), welche auf der Kopplungswelle (14) angebracht sind, um sich um eine Längsachse (16) der Kopplungswelle (14) zu drehen, wobei jede Kopplungswelle (14) einen Zentralstift (17) umfasst, der aus einem Metallmaterial hergestellt ist und durch eine glatte Außenzylinderoberfläche (18) begrenzt wird, **dadurch gekennzeichnet, dass** ein Abstandselement (20), das aus einem Plastikmaterial hergestellt, auf dem Stift (17) zwischen den Rollen (15) angeordnet ist; wobei die Kopplungswelle (14) durch das Abstandselement (20) an die Basis (4) gekoppelt ist.

2. Einwickelmaschine nach Anspruch 1, wobei das Abstandselement (20) an den Stift (17) in einer axial- und winkelbezogenen fixierten Art und Weise gekoppelt ist.

3. Einwickelmaschine nach Anspruch 1 oder 2, wobei die Basis (4) für jede Rollenunterstützungseinrichtung (7) eine entsprechende Aufnahme (27) aufweist, welche derart ausgebildet ist, um die Kopplungswelle (14) der Rollenunterstützungseinrichtung (7) aufzunehmen und zu halten.

4. Einwickelmaschine nach Anspruch 3, wobei die Aufnahme (27) eine Führung (29) umfasst, welche mit dem Abstandselement (20) auf eine hinsichtlich Verschiebung und Winkel fixierten Art und Weise in Eingriff ist.

5. Einwickelmaschine nach Anspruch 4, wobei die Aufnahme (27) im Wesentlichen die Form einer Gabel aufweist und zwei im Wesentlichen parallele Arme (28) umfasst, welche die Führung (29) definieren.

6. Einwickelmaschine nach Anspruch 5, wobei das Abstandselement (20) wenigstens teilweise radial durch zwei ebene Oberflächen (25) begrenzt wird, welche im Wesentlichen parallel zueinander sind, um so die Führung (29) in einer hinsichtlich einer Verschiebung und hinsichtlich eines Winkels fixierten Art und Weise in Eingriff zu bringen.

7. Einwickelmaschine nach Anspruch 6, wobei das Abstandselement (20) zwei weite Endabschnitte (22) und einen schmalen Mittelabschnitt (21) umfasst, der zwischen den Endabschnitten (22) angeordnet ist; wobei die ebenen Flächen (25) an dem Mittelabschnitt (21) gebildet sind.

8. Einwickelmaschine nach einem der vorhergehenden Ansprüche, wobei die Drehplattform (8) in Kontakt mit den Rollen (15) der Rollenunterstützungseinrichtungen (15) ist.

9. Einwickelmaschine nach einem der vorhergehenden Ansprüche, wobei der Zentralstift (17) einen konstanten Durchmesser aufweist.

## Revendications

1. Machine à emballer comprenant une plate-forme rotative pour emballer des produits (2) comportant au moins une bande de matériau d'emballage (3); la machine à emballer comprenant une base (4); une plate-forme rotative (8), qui définit une surface de support (P) pour au moins un produit (2) et qui est agencée sur la base (4) de manière à tourner autour d'un axe de rotation (9) qui est sensiblement perpendiculaire à la surface de support (P); une pluralité de dispositifs de support de rouleaux (7), qui sont interposés entre la base (4) et la plate-forme rotative (8) et qui sont distribués autour dudit axe de rotation (9); un montant de guidage (13), qui est sensiblement parallèle audit axe de rotation (9); et une coulisse de support (11), qui est configurée de manière à recevoir et à maintenir une bobine (12) de la bande de matériau d'emballage (3) et qui est déplaçable le long du montant de guidage (13); chaque dispositif de support de rouleaux (7) comprenant un arbre de couplage (14) agencé sur la base (4) et une paire de rouleaux (15) agencés sur l'arbre de couplage (14) de manière à tourner autour d'un axe longitudinal (16) de l'arbre de couplage (14); chaque arbre de couplage (14) comprenant une broche centrale (17), qui est constituée d'un matériau métallique et qui est délimitée par une surface cylindrique extérieure lisse (18), **caractérisée en ce qu'**un espaceur (20), qui est constitué d'une matière plastique, est agencé sur la broche (17) entre les rouleaux (15); l'arbre de couplage (14) étant couplé à la base (4) par l'intermédiaire de l'espaceur (20).

2. Machine à emballer selon la revendication 1, dans laquelle l'espaceur (20) est couplé à la broche (17) d'une manière axialement et angulairement fixe.

3. Machine à emballer selon la revendication 1 ou 2, dans laquelle la base (4) présente, pour chaque dispositif de support de rouleaux (7), un siège respectif (27), qui est configuré de manière à recevoir et à maintenir l'arbre de couplage (14) du dispositif de support de rouleaux (7).

4. Machine à emballer selon la revendication 3, dans laquelle le siège (27) comprend un guide (29), qui est engagé par l'espaceur (20) d'une manière coulissante et angulairement fixe.

5. Machine à emballer selon la revendication 4, dans laquelle le siège (27) présente sensiblement la forme d'une fourche et comprend deux bras sensiblement parallèles (28) qui définissent le guide (29).

6. Machine à emballer selon la revendication 5, dans laquelle l'espaceur (20) est au moins partiellement radialement délimité par deux surfaces plates (25), qui sont sensiblement parallèles entre elles de manière à engager le guide (29) d'une manière coulissante et angulairement fixe.

7. Machine à emballer selon la revendication 6, dans laquelle l'espaceur (20) comprend deux parties d'extrémité larges (22) et une partie intermédiaire étroite (21), qui est agencée entre les parties d'extrémité (22); les faces plates (25) étant formées au niveau de la partie intermédiaire (21).

8. Machine à emballer selon l'une quelconque des revendications précédentes, dans laquelle la plate-forme rotative (8) est en contact avec les rouleaux (15) des dispositifs de support de rouleaux (15).

9. Machine à emballer selon l'une quelconque des revendications précédentes, dans laquelle la broche centrale (17) présente un diamètre
